# EUROPEAN PATENT APPLICATION

(11) **EP 4 844 907 A1**
(43) Date of publication of application: **25.11.2026**
(21) Application number: 24934642.0
(22) Date of filing: 13.06.2024
(51) Int. Cl.: H01M 50/172

(54) **BATTERY CELL, BATTERY, AND ELECTRICAL DEVICE**

(30) Priority: 09.04.2024 CN 202420723956 U
(71) Applicant: Contemporary Amperex Technology Co., Limited, Ningde, Fujian 352100 (CN)
(72) Inventor: CHEN, Shengwang, Ningde, Fujian 352100 (CN); HUANG, Shaobin, Ningde, Fujian 352100 (CN); GUO, Zhijun, Ningde, Fujian 352100 (CN); WANG, Peng, Ningde, Fujian 352100 (CN)
(74) Representative: Straus, Alexander
(86) International application number: PCT/CN2024/098842
(87) International publication number: WO 2025/213572

(57) **Abstract**

Disclosed in the present application are a battery cell, a battery and an electrical device. The battery cell comprises a casing, an electrode terminal, an electrode assembly and a connector. The electrode terminal is arranged in the casing. The electrode assembly is accommodated in the casing. The electrode assembly comprises a body portion and a tab, the tab extending out from the end of the body portion facing the electrode terminal. The connector is welded to the tab to form a first welding portion, and the connector, the tab and the electrode terminal are welded to form a second welding portion. By means of the first welding portion and the second welding portion, a plurality of conductive paths can be formed between the tab and the electrode terminal, thereby improving the current-passing capability between the tab and the electrode terminal and reducing heat production.

## Description

### CROSS-REFERENCE TO RELATED APPLICATION

The present application claims the priority to Chinese Patent Application No. 202420723956.3 filed on April 09, 2024 and entitled "BATTERY CELL, BATTERY, AND ELECTRIC APPARATUS", which is incorporated herein by reference in its entirety.

### TECHNICAL FIELD

The present application relates to the field of batteries, and particularly relates to a battery cell, a battery, and an electric apparatus.

### BACKGROUND

Battery cells are widely used in electronic devices such as mobile phones, laptops, battery vehicles, electric vehicles, electric planes, electric ships, electric toy cars, electric toy ships, electric toy planes, electric tools, and the like.

How to improve the reliability of a battery cell is a research direction in the battery technology.

### SUMMARY OF THE INVENTION

The present application provides a battery cell, a battery, and an electric apparatus, aiming to improve the reliability of the battery cell.

In a first aspect, the present application provides a battery cell, which includes a shell, an electrode terminal, an electrode assembly, and a connecting piece. The electrode terminal is arranged on the shell. The electrode assembly is accommodated in the shell. The electrode assembly includes a main body portion and a tab. The tab extends out from one end, facing the electrode terminal, of the main body portion. The connecting piece is welded to the tab to form a first welded portion, and the connecting piece, the tab, and the electrode terminal are welded to form a second welded portion.

Multiple conductive paths can be formed between the tab and the electrode terminal through the first welded portion and the second welded portion, thereby improving the current-carrying capacity between the tab and the electrode terminal and reducing heat generation. Compared to the second welded portion, the formation of the first welded portion is independent of the electrode terminal. The first welded portion has a smaller impact on the tab, and the part, close to the first welded portion, of the tab is less likely to tear. When the battery cell is subjected to external impact, even if the part, close to the second welded portion, of the tab tears, a current can still be conducted to the electrode terminal through the first welded portion, the connecting piece, and the second welded portion, thereby reducing the risk of a failure of the connection between the tab and the electrode terminal and improving the reliability of the battery cell.

In some embodiments, the first welded portion is directly connected to the second welded portion. During the operation of the battery cell, the current can be directly transmitted between the first welded portion and the second welded portion, thereby shortening the conductive path, reducing resistance, improving the current-carrying capacity, and reducing heat generation.

In some embodiments, at least a part of the first welded portion is arranged around the second welded portion, which can reduce the distance difference between different parts of the first welded portion and the second welded portion, thereby improving the current-carrying uniformity, and reducing heat generation.

In some embodiments, an entire outer peripheral edge of the second welded portion is directly connected to the first welded portion to increase a current-carrying area between the first welded portion and the second welded portion, thereby reducing resistance, shortening the conductive path, improving the current-carrying capacity, and reducing heat generation.

In some embodiments, in a thickness direction of the connecting piece, at least a part of the connecting piece is located between the electrode terminal and the tab, and is welded to both the tab and the electrode terminal. Arranging the connecting piece between the tab and the electrode terminal can reduce the risk of interference between the connecting piece and the tab during the bending process of the tab.

In some embodiments, the tab includes a laminated section and a bent section, the laminated section is attached to the connecting piece in the thickness direction, and the bent section is bent from one end of the laminated section and connected to the main body portion. The laminated section is welded to the connecting piece to form the first welded portion, and the connecting piece, the laminated section, and the electrode terminal are welded to form the second welded portion. By bending the tab, the space occupied by the tab in the thickness direction can be reduced, so that the space utilization rate is improved.

In some embodiments, in the thickness direction, a part of the connecting piece does not overlap with the laminated section. The connecting piece has a larger size, which thus can reduce the risk of cold solder joints and improve the connection strength when the connecting piece and the laminated section are welded. In addition, when the laminated section, the connecting piece, and the electrode terminal are welded, a part of the connecting piece can be not obscured by the laminated section, thereby facilitating positioning the connecting piece, improving the welding accuracy, and reducing the risk of cold solder joints.

In some embodiments, the laminated section includes a first edge and two second edges, the first edge is located at one end, away from the bent section, of the laminated section, and the two second edges are arranged opposite to each other and connected to the first edge. A part of the connecting piece extends beyond the first edge; and in an arrangement direction of the two second edges, both the second edges extend beyond the connecting piece.

When the tab, the connecting piece, and the electrode terminal are welded, the part, extending beyond the first edge, of the connecting piece can be used for positioning, thereby improving the welding accuracy and reducing the risk of cold solder joints. In an arrangement direction of the two second edges, the connecting piece can have a smaller size than the laminated section, thereby saving space and increasing the energy density.

In some embodiments, the electrode terminal has an inner surface facing the connecting piece, and the inner surface is attached to the connecting piece in the thickness direction. The laminated section includes two second edges arranged opposite to each other; and in an arrangement direction of the two second edges, both ends of the connecting piece extend beyond the inner surface, and both the second edges extend beyond the connecting piece. The connecting piece can cover the electrode terminal as much as possible, thereby reducing the risk of cold solder joints and increasing the contact area and connection strength between the connecting piece and the electrode terminal. In the arrangement direction of the two second edges, the part, extending beyond the electrode terminal, of the connecting piece will not connect to the electrode terminal. Therefore, the connecting piece can have a smaller size than the laminated section, thereby saving space and increasing the energy density.

In some embodiments, in an extension direction of the tab, at least a part of the first welded portion is located between a root portion of the tab and the second welded portion. The embodiments of the present application can shorten the conductive path, thereby reducing heat generation, and improving the current-carrying capacity.

In some embodiments, in the thickness direction of the connecting piece, a projected area of the first welded portion is greater than or equal to 0.2 times a projected area of the second welded portion, so as to improve the current-carrying capacity between the tab and the electrode terminal, reduce the risk of a failure of the connection between the tab and the electrode terminal, and improve the reliability of the battery cell.

In some embodiments, the connecting piece and the tab are connected by ultrasonic welding to form the first welded portion, and the connecting piece, the tab, and the electrode terminal are connected by laser welding to form the second welded portion. During ultrasonic welding, the tab is less affected by heat; and after welding is completed, the part, close to the first welded portion, of the tab is less prone to tearing. Laser welding can reduce the welding difficulty and increase the strength of the second welded portion formed by welding.

In some embodiments, a thickness of the connecting piece is 0.1 mm to 1.5 mm. Limiting the thickness of the connecting piece to be greater than or equal to 0.1 mm can improve the strength of the connecting piece, thereby reducing the risk of the connecting piece tearing. Limiting the thickness of the connecting piece to be less than or equal to 1.5 mm can reduce the welding difficulty, reduce the welding heat generation, and reduce the thermal stress on the tab, thereby reducing the risk of the tab tearing.

In a second aspect, the present application provides a battery which includes a plurality of battery cells according to any one embodiment in the first aspect.

In a third aspect, the present application provides an electric apparatus which includes the battery provided according to any one embodiment in the second aspect. The battery is used for providing electric energy.

### BRIEF DESCRIPTION OF DRAWINGS

The features, advantages and technical effects of the exemplary embodiments of the present application will be described with reference to the accompanying drawings.
FIG. 1 is a structural schematic view of a vehicle provided by some embodiments of the present application;
FIG. 2 is a schematic exploded view of a battery according to some embodiments of the present application;
FIG. 3 is a schematic structural view of a battery cell according to some embodiments of the present application;
FIG. 4 is a schematic sectional view of the battery cell according to some embodiments of the present application;
FIG. 5 is another schematic sectional view of the battery cell according to some embodiments of the present application;
FIG. 6 is an enlarged schematic view of a round frame in FIG. 4;
FIG. 7 is an enlarged schematic view of a block in FIG. 5; and
FIG. 8 is still another schematic sectional view of the battery cell according to some embodiments of the present application.

### List of reference numerals:

1, Vehicle; 2, battery; 3, controller; 4, motor; 5, box body; 5a, first box body portion; 5b, second box body portion; 5c, accommodating space; 6, battery cell;
10, electrode assembly; 11. main body portion; 12. tab; 121. laminated section; 121a, first edge; 121b, second edge; 122. bent section; 123, root portion;
20, shell; 21, case; 22, end cover;
30, electrode terminal; 31, inner surface; 40, connecting piece; 50, terminal plate;
W1, first welded portion; W2, second welded portion; X, second direction; Y, first direction; Z, thickness direction.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All other embodiments obtained by those of ordinary skill in the art based on the embodiments in the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "include" and "have" and any variations thereof in the specification and the claims of the present application as well as the above description of the drawings are intended to cover non-exclusive inclusions. The terms "first", "second", and the like in the specification and the claims of the present application as well as the above drawings are used to distinguish different objects, rather than to describe a specific order or primary-secondary relationship.

Reference in the present application to an "embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting", "connecting", "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is merely an association that describes the associated object, indicating that there can be three kinds of relationships, for example, A and/or B may denote the following three situations: A exists alone, A and B exist at the same time, and B exists alone. In addition, the character "/" in the present application generally means that the associated objects before and after it are in an "or" relationship.

In the embodiments of the present application, the same reference numerals denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the "plurality of" refers to more than two (including two).

In the embodiments of the present application, the battery cell may be a secondary battery. The secondary battery refers to a battery cell that, after being discharged, can activate an active material by charging for continued use.

The battery cell can, include but is not limited to, a lithium-ion battery cell, a sodium-ion battery cell, a sodium/lithium-ion battery cell, a lithium metal battery cell, a sodium metal battery cell, a lithium-sulfur battery cell, a magnesium-ion battery cell, a nickel-metal hydride battery cell, a nickel-cadmium battery cell, a lead storage battery cell, etc.

As an example, the battery cell may be a cylindrical battery cell, a prismatic battery cell, or a battery cell in another shape. The prismatic battery cell comprises a square-shell battery cell, a blade-shaped battery cell, and a polygonal prism battery. For example, the polygonal prism battery may be a hexagonal prism battery. The present application has no special limitation.

The battery mentioned in the embodiments of the present application refers to a single physical module comprising one or more battery cells to provide a higher voltage and capacity.

In some embodiments, the battery may be a battery module. When there are a plurality of battery cells, the plurality of battery cells are arranged and fixed to form a battery module.

In some examples, the battery may be a battery pack. The battery pack includes a box body and a battery cell. The battery cell or the battery module is accommodated in the box body.

In some embodiments, the box body may serve as a part of a chassis structure of the vehicle. For example, a part of the box body may become at least a part of a vehicle floor, or a part of the box body may become at least a part of a cross beam and a longitudinal beam of a vehicle.

In some embodiments, the battery may be an energy storage apparatus. The energy storage apparatus includes an energy storage container, an energy storage cabinet, and the like.

The battery cell generally includes an electrode assembly, a shell, and an electrode terminal, the electrode assembly is accommodated in the shell, and the electrode terminal is provided with the shell. The electrode assembly include a tab, and the tab is electrically connected to the electrode terminal; and the electrode terminal can be configured to electrically connect the electrode assembly to a circuit outside the battery cell, so as to achieve charging or discharging of the battery cell.

In related technologies, the tab can be directly connected to the electrode terminal by welding, and a welded point between the tab and the electrode terminal can transmit current. However, the tab is relatively thin, and when the battery cell is subjected to external impact, the part, close to the welded point, of the tab is easily torn, thereby reducing the current-carrying capacity between the tab and the electrode terminal, increasing heat generation, and even causing a failure of the connection between the tab and the electrode terminal, which affects the reliability of the battery cell.

In view of this, an embodiment of the present application provides a technical solution in which the tab and the electrode terminal are connected by arranging the connecting piece, and multiple conductive paths are formed between the tab and the electrode terminal, thereby improving the current-carrying capacity between the tab and the electrode terminal, reducing heat generation, reducing the risk of a failure of the connection between the tab and the electrode terminal, and improving the reliability of the battery cell.

The technical solution described in the embodiment of the present application is applicable to electric apparatuses using batteries.

The electric apparatus may be a vehicle, a mobile phone, a portable device, a laptop computer, a ship, a spacecraft, an electric toy, an electric tool, and the like. The vehicle may be a fuel vehicle, a gas vehicle, or a new energy vehicle. The new energy vehicle may be an all-electric vehicle, a hybrid electric vehicle, an extended-range electric vehicle, or the like. The spacecraft includes an airplane, a rocket, a space shuttle, a spaceship, and the like. The electric toy includes a fixed or mobile electric toy, such as a game console, an electric car toy, an electric ship toy, and an electric aircraft toy. The electric tool includes a metal cutting electric tool, a grinding electric tool, an assembly electric tool, and a railway electric tool, such as an electric drill, an electric grinder, an electric wrench, an electric a screwdriver, an electric hammer, an impact drill, a concrete vibrator, and an electric planer. The electric apparatus is not specially limited in the embodiments of the present application.

In the following embodiments, for the convenience of description, the electric apparatus being a vehicle is taken as an example for illustration.

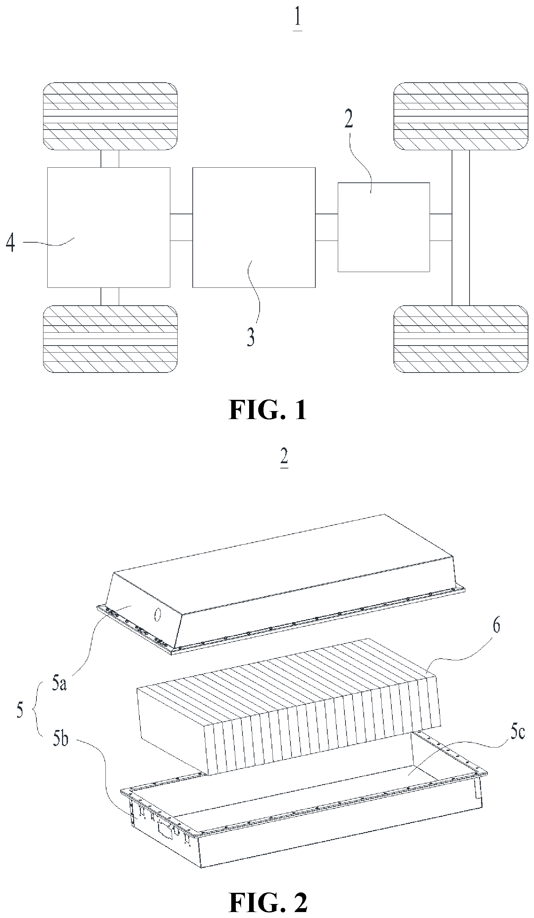

FIG. 1 is a schematic structural view of a vehicle provided in some embodiments of the present application.

As shown in FIG. 1, a battery 2 is provided inside the vehicle 1. The battery 2 may be arranged at the bottom, or head, or tail of the vehicle 1. The battery 2 may be used for supplying power to the vehicle 1. For example, the battery 2 may be used as an operating power source for the vehicle 1.

The vehicle 1 can further comprise a controller 3 and a motor 4. The controller 3 is used for controlling the battery 2 to supply power to the motor 4, for example, for the operating power demand when starting, navigating, and driving the vehicle 1.

In some embodiments of the present application, the battery 2 can be used not only as an operating power source for the vehicle 1, but also as a driving power source for the vehicle 1 to replace or partially replace fuel or natural gas to supply driving power to the vehicle 1.

FIG. 2 is an exploded schematic view of a battery provided by some embodiments of the present application.

As shown in FIG. 2, the battery 2 includes a box body 5 and a battery cell 6; and the battery cell 6 is accommodated within the box 5.

The box body 5 is configured to accommodate the battery 6 and may be in various structural forms. In some embodiments, the box 5 may include a first box part 5a and a second box part 5b; the first box part 5a and the second box part 5b are mutually covered; the first box part 5a and the second box part 5b jointly define an accommodating space 5c used for accommodating the battery cell 6. The second box part 5b may be of a hollow structure with an opening formed in one end; the first box part 5a is of a plate-shaped structure, and the first box part 5a covers the opening side of the second box part 5b to form the box 5 with the accommodating space 5c; each of the first box part 5a and the second box part 5b may also be of a hollow structure with an opening formed in one side; and the opening side of the first box part 5a covers the opening side of the second box part 5b to form the box 5 with the accommodating space 5c. Of course, the first box body part 5a and the second box body part 5b can be in various shapes, such as cylinders and cuboids.

In order to improve the sealing performance after the first box body part 5a and the second box body part 5b are connected, a sealing member such as a sealant and a sealing ring may also be arranged between the first box body part 5a and the second box body part 5b.

It is assumed that the first box part 5a covers the top of the second box part 5b, the first box part 5a can also be called as an upper box cover, and the second box part 5b can also be called as a lower box.

In the battery 2, one or a plurality of battery cells 6 can be arranged. If a plurality of battery cells 6 are arranged, the plurality of battery cells 6 can be connected in series or in parallel or in series-parallel connection; and series-parallel connection refers to that the plurality of battery cells 6 are connected in series and in parallel. The plurality of battery cells 6 may be directly connected in series or in parallel or in series and parallel, and then the whole body formed by the plurality of battery cells 6 is accommodated in the box body 5. Certainly, the plurality of battery cells 6 may also be first connected in series or in parallel or in series and parallel to form a battery module; and a plurality of battery modules are then connected in series or in parallel or in series and parallel to form a whole body, which is accommodated in the box body 5.

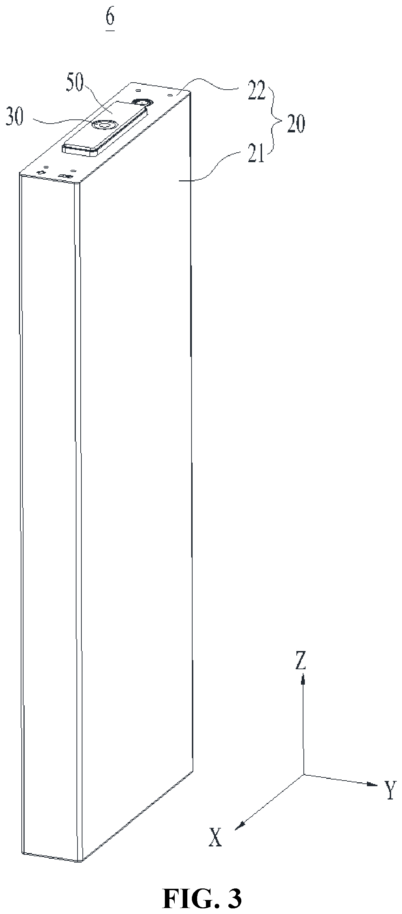

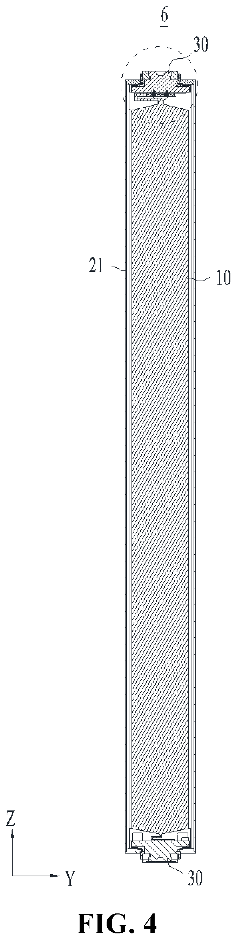

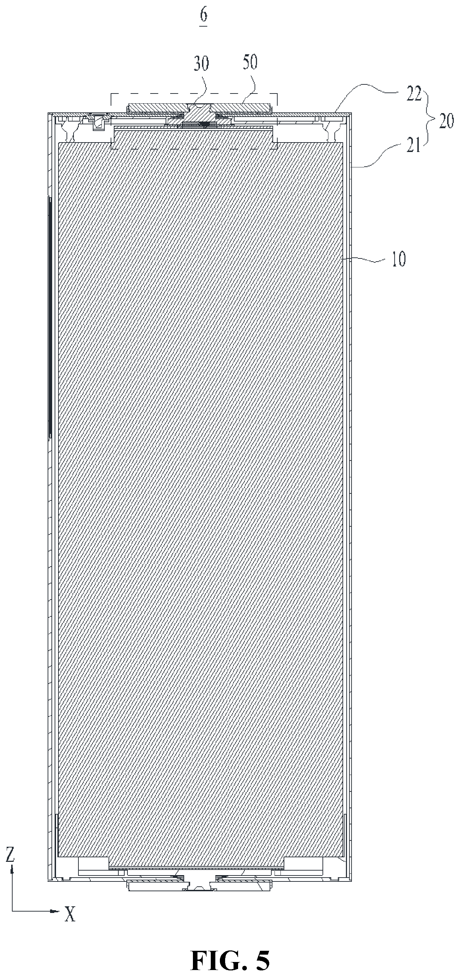

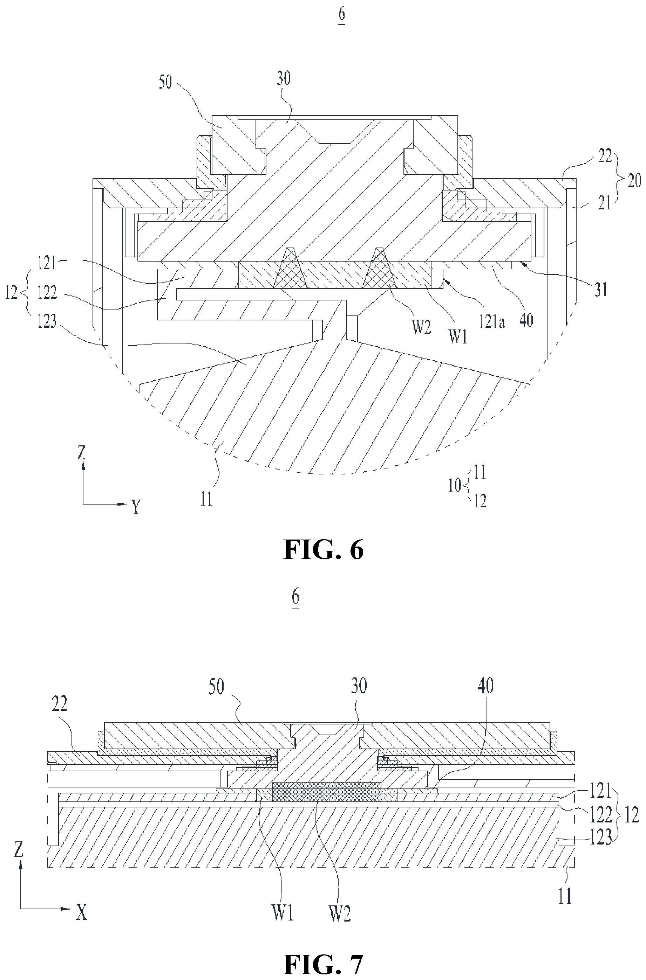

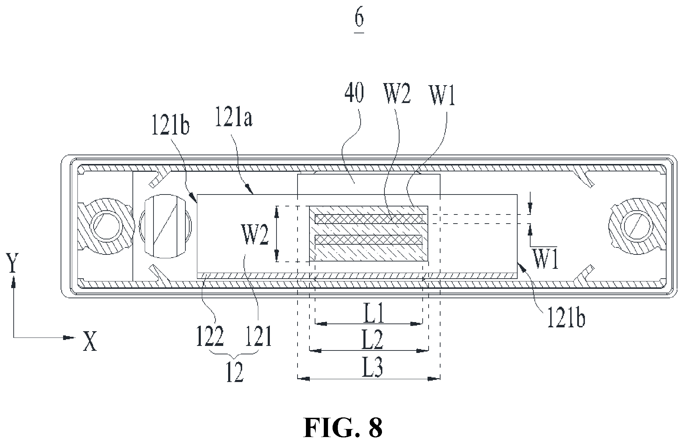

FIG. 3 is a schematic structural view of a battery cell according to some embodiments of the present application; FIG. 4 is a schematic sectional view of the battery cell according to some embodiments of the present application; FIG. 5 is another schematic sectional view of the battery cell according to some embodiments of the present application; FIG. 6 is an enlarged schematic view of a round frame in FIG. 4; FIG. 7 is an enlarged schematic view of a block in FIG. 5; and FIG. 8 is still another schematic sectional view of the battery cell according to some embodiments of the present application.

With reference to FIG. 3 to FIG. 8, embodiments of the present application provide a battery cell 6, which includes a shell 20 and an electrode assembly 10, and the electrode assembly 10 is accommodated in the shell 20.

The electrode assembly 10 includes a positive electrode and a negative electrode. During the charging and discharging of the battery cell 6, active ions (such as lithium ions) are intercalated and deintercalated back and forth between the positive electrode and the negative electrode. Optionally, the electrode assembly 10 further includes a spacer arranged between the positive electrode and the negative electrode. The spacer can reduce a risk of short circuit between the positive electrode and the negative electrode, while allowing active ions to pass through.

The shell 20 is configured to encapsulate components such as the electrode assembly 10 and an electrolyte. The shell 20 may be a steel shell, an aluminum shell, a plastic shell (e.g., polypropylene), a composite metal shell (e.g., a copper-aluminum composite shell), or an aluminum-plastic film, etc.

In some embodiments, the positive electrode includes a positive electrode plate. The positive electrode plate may include a positive electrode current collector and a positive electrode active material layer arranged on at least one surface of the positive electrode current collector.

For example, the positive electrode current collector has two surfaces opposite to each other in a thickness direction thereof. The positive electrode active material layer is arranged on either or both of the two opposite surfaces of the positive electrode current collector.

In some embodiments, the negative electrode includes a negative electrode plate. The negative electrode plate may include a negative electrode current collector and a negative electrode active material layer arranged on at least one surface of the negative electrode current collector.

In some embodiments, a material of the positive electrode current collector may be aluminum, and a material of the negative electrode current collector may be copper.

In some embodiments, the electrode assembly 10 further includes a spacer, and the spacer is configured to separate the positive electrode plate from the negative electrode plate. The spacer can reduce the risk of short circuit between the positive electrode and the negative electrode, while allowing active ions to pass through.

In some embodiments, the spacer includes a separator. The separator of the present application can be selected from any well-known separator having good chemical stability, mechanical stability, and a porous structure.

In some embodiments, the electrode assembly 10 is of a wound structure. For example, both the positive electrode plate and the negative electrode plate are of a strip-shaped structure, and the positive electrode plate, the spacer, and the negative electrode plate are wound into a wound structure.

In some embodiments, the electrode assembly 10 is of a stacked structure.

As an example, a plurality of positive electrode plates and a plurality of negative electrode plates may be provided respectively, and the plurality of positive electrode plates and the plurality of negative electrode plates are stacked alternately.

As an example, a plurality of positive electrode plates may be provided, and the negative electrode plates are folded to form a plurality of stacked folded segments, with one positive electrode plate sandwiched between adjacent folded segments.

As an example, both the positive electrode plate and the negative electrode plate are folded to form a plurality of laminated folded segments.

In some embodiments, the shape of the electrode assembly 10 can be cylindrical, flat, or polygonal prism-shaped.

In some embodiments, the shell 20 includes a case 21 and an end cover 22. The case 21 has an opening, and the end cover 22 is configured to cover the opening.

The case 21 is a component matched with the end cover 22 to form an internal cavity of the battery cell 6, and the formed internal cavity can be used for accommodating the electrode assembly 10, the electrolyte and other components.

The case 21 and the end cover 22 can be independent components. Exemplarily, an opening may be formed in the shell body 21, and the end cover 22 covers the opening to form the internal cavity of the battery cell 6.

The shell 21 can be in various shapes and various sizes, such as a cuboid shape, a cylinder shape, and a hexagonal prism shape. Specifically, the shape of the case 21 can be determined based on the specific shape and size of the electrode assembly 10. The case 21 may also be made of a variety of materials. For example, the material of the case 21 includes, but is not limited to, copper, iron, aluminum, stainless steel, an aluminum alloy, an aluminum-plastic film, a steel-plastic film, etc.

The shape of the end cover 22 can be adapted to the shape of the case 21 for matching with the case 21. A material of the end cover 22 may be the same as that of the shell body 21 or not. Optionally, the end cover 22 may be made of a material (such as copper, iron, aluminum, stainless steel, aluminum alloy and plastic) with certain hardness and strength, and therefore, the end cover 22 is unlikely to deform when being extruded and collided, the battery cell 6 can gain higher structural strength, and the reliability may also be improved.

The end cover 22 is connected to the shell body 21 in a welding, bonding, clamping or another mode.

Either one or both ends of the case 21 can be opened. In some examples, the case 21 may have a structure with one side open, and one end cover 22 is provided and covers the case 21. In some other examples, the shell 21 may also of a structure with both sides open, two end covers 22 are provided, and the two end covers 22 respectively cover the two openings of the case 21.

In some embodiments, the battery cell 6 includes an electrode terminal 30 arranged on the shell 20, and the electrode terminal 30 is electrically connected to the tab 12 of the electrode assembly 10. The electrode terminal 30 can be configured to electrically connect the electrode assembly 10 to a circuit outside the battery cell 6, so as to realize charging and discharging of the electrode assembly 10. For example, at least a part of the electrode terminal 30 is exposed to the outside of the battery cell 6, so as to facilitate connection with other components (such as a busbar component) to lead out the electric energy generated by the electrode assembly 10.

For example, the electrode terminal 30 may be arranged on the end cover 22, or on the case 21.

In some embodiments, the electrode assembly 10 includes a main body portion 11 and the tab 12. For example, the main body portion 11 may include a part, coated with an active material layer, of the positive electrode plate, a part, coated with an active material layer, of the negative electrode plate, and a spacer. An active material in the active material layer is configured to have an electrochemical reaction with an electrolyte, so as to generate a charging and discharging process.

In some embodiments, a plurality of tabs 12 may be arranged. The plurality of tabs 12 include a positive tab and a negative tab, and the positive tab and the negative tab may be led out from the same end of the main body portion 11, or led out from two opposite ends of the main body portion 11, respectively. For example, two electrode terminals 30 may be arranged, and the two electrode terminals 30 are electrically connected to the positive tab and the negative tab, respectively.

In some embodiments, the tab 11 extends out from one end, facing the electrode terminal 30, of the main body portion 12.

In some examples, the two electrode terminals 30 are located on the same side of the main body portion 11, and the positive tab and the negative tab extend from the same end of the main body portion 11. In some other examples, the two electrode terminals 30 are located on two sides of the main body portion 11, respectively, with the positive tab extending out from one end, facing one electrode terminal 30, of the main body portion 11 and the negative tab extending out from one end, facing the other electrode terminal 30, of the main body portion 11.

In some embodiments, the tab 12 includes a plurality of tab layers, and the plurality of tab layers are stacked. By arranging the plurality of tab layers, the current-carrying capacity of the tab 12 can be increased, the heat generation of the tab 12 can be reduced, and the risk of the tab 12 fusing can be reduced.

For example, the tab layer is made of a metal foil material with no active material layer coated on a surface thereof.

For example, the tab layer of the positive tab is made of an aluminum foil, and the tab layer of the negative tab is made of a copper foil.

In some embodiments, the end cover 22 is provided with an electrode lead-out hole, which extends through the end cover 22 in a thickness direction of the end cover 22. The electrode terminal 30 passes through the electrode lead-out hole. For example, the battery cell 6 also includes a terminal plate 50, the terminal plate 50 is located outside the end cover 22, and the part, extending outside the end cover 22, of the electrode terminal 30 is riveted to the terminal plate 50. For example, the terminal plate 50 is configured to connect to an external busbar.

In some embodiments, the battery cell 6 includes a shell 20, an electrode terminal 30, an electrode assembly 10, and a connecting piece 40. The electrode terminal 30 is arranged on the shell 20. The electrode assembly 10 is accommodated in the shell 20, the electrode assembly 10 includes a main body portion 11 and a tab 12, and the tab 12 extends out from one end, facing the electrode terminal 30, of the main body portion 11. The connecting piece 40 is welded to the tab 12 to form a first welded portion W1, and the connecting piece 40, the tab 12, and the electrode terminal 30 are welded to form a second welded portion W2.

In some examples, the first welded portion W1 can be directly connected to the second welded portion W2. For example, during the operation of the battery cell 6, the current on the tab 12 can be conducted to the electrode terminal 30 through the first welded portion W1 and the second welded portion W2.

In some other examples, the first welded portion W1 and the second welded portion W2 are spaced apart by a certain distance and are connected by a part of the connecting piece 40. For example, during the operation of the battery cell 6, a part of the current on the tab 12 is conducted to the electrode terminal 30 through the second welded portion W2, and another part of the current on the tab 12 can be conducted to the electrode terminal 30 through the first welded portion W1, the connecting piece 40, and the second welded portion W2.

One or more first welded portion W1 can be provided. One or more second welded portion W2 can be provided.

The first welded portion W1 and the second welded portion W2 can be formed by the same welding process or by different welding processes.

In some examples, at least a part of the connecting piece 40 is arranged between the tab 12 and the electrode terminal 30 and is welded to the tab 12 and the electrode terminal 30; in some other examples, at least a part of the tab 12 is arranged between the connecting piece 40 and the electrode terminal 30 and is welded to the connecting piece 40 and the electrode terminal 30.

The area of the first welded portion W1 may be greater than, equal to or less than the area of the second welded portion W2.

Multiple conductive paths can be formed between the tab 12 and the electrode terminal 30 through the first welded portion W1 and the second welded portion W2, thereby improving the current-carrying capacity between the tab 12 and the electrode terminal 30 and reducing heat generation. Compared to the second welded portion W2, the formation of the first welded portion W1 is independent of the electrode terminal 30. The first welded portion W1 has a smaller impact on the tab 12 (for example, the thermal stress on the tab 12 is relatively small), and the part, close to the first welded portion W1, of the tab 12 is less likely to tear. When the battery cell 6 is subjected to external impact, even if the part, close to the second welded portion W2, of the tab 12 tears, a current can still be conducted to the electrode terminal 30 through the first welded portion W1, the connecting piece 40, and the second welded portion W2, thereby reducing the risk of a failure of the connection between the tab 12 and the electrode terminal 30 and improving the reliability of the battery cell 6.

In some embodiments, the part of the tab 12 that is not welded to other components is directly connected to the first welded portion W1. For example, the plurality of tab layers of the tab 12 are directly connected to the first welded portion W1. For example, the thickness of the tab layer is 2 µm to 30 µm. Optionally, the thickness of the tab layer is 5 µm to 15 µm.

In some embodiments, the first welded portion W1 is directly welded to the second welded portion W2.

For example, the first welded portion W1 is arranged along the outer periphery of the second welded portion W2. For example, the first welded portion W1 may extend along the outer periphery of the second welded portion W2 by 0.25 turn, 0.5 turn, 0.75 turn, or 1 turn.

During the operation of the battery cell 6, the current can be directly transmitted between the first welded portion W1 and the second welded portion W2, thereby shortening the conductive path, reducing resistance, improving the current-carrying capacity, and reducing heat generation.

In some embodiments, in an extension direction of the tab 12, at least a part of the first welded portion W1 is located between a root portion 123 of the tab 12 and the second welded portion W2.

For example, the tab 12 extends outward from an end surface of the main body portion 11, and the part, close to the end surface of the main body portion 11, of the tab 12 may be the root portion 123 of the tab 12.

The current generated by the main body portion 11 flows through the root portion 123 of the tab 12 to the first welded portion W1 and the second welded portion W2. When the battery cell 6 is subjected to external impact, even if the part, close to the second welded portion W2, of the tab 12 tears, the current can still be conducted to the electrode terminal 30 through the root portion 123, the first welded portion W1, and the second welded portion W2. At least a part of the first welded portion W1 is located between the root portion 123 of the tab 12 and the second welded portion W2, which thus can reduce the current flowing to the part of the tab 12 located on the side, away from the root portion 123, of the second welded portion W2, thereby shortening the conductive path, reducing heat generation and improving the current-carrying capacity.

In some embodiments, at least a part of the first welded portion W1 is arranged around the second welded portion W2, which can reduce the distance difference between different parts of the first welded portion W1 and the second welded portion W2, improve the current-carrying uniformity, and reduce heat generation.

In some embodiments, an entire outer peripheral edge of the second welded portion W2 is directly connected to the first welded portion W1 to increase a current-carrying area between the first welded portion W1 and the second welded portion W2, thereby reducing resistance, shortening the conductive path, improving the current-carrying capacity, and reducing heat generation.

For example, the first welded portion W1 separates the second welded portion W2 from the tab layer, so as to reduce the risk of the tab layer tearing.

In some other embodiments, the first welded portion W1 surrounds the second welded portion W2 and is arranged spaced apart from the second welded portion W2. When the main body portion 11 vibrates and pulls the tab 12, the first welded portion W1 can block the pulling force to reduce the force at the joint between the tab 12 and the second welded portion W2.

In some embodiments, in the thickness direction Z of the connecting piece 40, a projected area of the first welded portion W1 is greater than or equal to 0.2 times a projected area of the second welded portion W2, so as to improve the current-carrying capacity between the tab 12 and the electrode terminal 30, reduce the risk of a failure of the connection between the tab 12 and the electrode terminal 30, and improve the reliability of the battery cell 6.

For example, the area of the second welded portion W2 can be set according to the requirements of the battery cell 6 for the current-carrying area. In other words, under normal circumstances, even without the first welded portion W1, the area of the second welded portion W2 can also meet the current-carrying requirements. The first welded portion W1 is arranged, and the projected area of the first welded portion W1 is set to be greater than or equal to 0.2 times the projected area of the second welded portion W2, so as to meet the current-carrying requirements in the event of unexpected situations such as the tab 12 tearing.

In some embodiments, the thickness of the connecting piece 40 is 0.1 mm to 1.5 mm. As an example, the thickness of the connecting piece 40 can be 0.1 mm, 0.2 mm, 0.4 mm, 0.5 mm, 0.6 mm, 0.8 mm, 1.0 mm, 1.2 mm, 1.4 mm, or 1.5 mm.

Limiting the thickness of the connecting piece 40 to be greater than or equal to 0.1 mm can improve the strength of the connecting piece 40 and reduce the risk of the connecting piece 40 tearing. Limiting the thickness of the connecting piece 40 to be less than or equal to 1.5 mm can reduce the welding difficulty, reduce the welding heat generation, and reduce the thermal stress on the tab 12, thereby reducing the risk of the tab 12 tearing.

In some embodiments, the thickness of the connecting piece 40 is 0.2 mm to 0.8 mm.

In some embodiments, the electrode terminal 30 is of an integrally formed structure. A part of the electrode terminal 30 is located inside the end cover 22 and is welded to the connecting piece 40 and the tab 12. Another part of the electrode terminal 30 is located outside the end cover 22 and is riveted to the terminal plate 50.

In some embodiments, the connecting piece 40 and the tab 12 are connected by ultrasonic welding to form the first welded portion W1. During ultrasonic welding, the tab 12 is less affected by heat; and after welding is completed, the part, close to the first welded portion W1, of the tab 12 is less prone to tearing.

In some embodiments, the connecting piece 40, the tab 12, and the electrode terminal 30 are connected by laser welding to form the second welded portion W2. Laser welding can reduce the welding difficulty and increase the strength of the second welded portion W2 formed by welding.

In some embodiments, in the thickness direction Z of the connecting piece 40, at least a part of the connecting piece 40 is located between the electrode terminal 30 and the tab 12, and is welded to both the tab 12 and the electrode terminal 30. Specifically, the part, located between the electrode terminal 30 and the tab 12, of the connecting piece 40 is welded to the tab 12 to form the first welded portion W1, and the part, located between the electrode terminal 30 and the tab 12, of the connecting piece 40 is welded to the tab 12 and the electrode terminal 30 to form the second welded portion W2.

Arranging the connecting piece 40 between the tab 12 and the electrode terminal 30 can reduce the risk of interference between the connecting piece 40 and the tab 12 during the bending process of the tab 12.

In some embodiments, the tab 12 includes a laminated section 121 and a bent section 122, the laminated section 121 is attached to the connecting piece 40 in the thickness direction Z, and the bent section 122 is bent from one end of the laminated section 121 and connected to the main body portion 11. The laminated section 121 is welded to the connecting piece 40 to form the first welded portion W1, and the connecting piece 40, the laminated section 121, and the electrode terminal 30 are welded to form the second welded portion W2.

By bending the tab 12, the space occupied by the tab 12 in the thickness direction Z can be reduced, so that the space utilization rate is improved.

In some embodiments, the bent section 122 is bent from one end, in a first direction Y, of the laminated section 121. For example, the first direction Y is perpendicular to the thickness direction Z. For example, the first direction Y may be parallel to the width direction of the end cover.

In some embodiments, in the thickness direction Z, a part of the connecting piece 40 does not overlap with the laminated section 121. The connecting piece 40 has a larger size, which thus can reduce the risk of cold solder joints and improves the connection strength when the connecting piece 40 and the laminated section 121 are welded. In addition, when the laminated section 121, the connecting piece 40, and the electrode terminal 30 are welded, a part of the connecting piece 40 can be not obscured by the laminated section 121, thereby facilitating positioning the connecting piece 40, improving the welding accuracy, and reducing the risk of cold solder joints.

In some embodiments, in the first direction Y, the size of the connecting piece 40 is greater than the size of the laminated section 121.

In the first direction Y, the connecting piece 40 has a larger size, which can reduce the risk of cold solder joints and improve the connection strength when the connecting piece 40 and the laminated section 121 are welded.

In some embodiments, the laminated section 121 includes a first edge 121a, and the first edge 121a is located at one end, away from the bent section 122, of the laminated section 121. A part of the connecting piece 40 extends beyond the first edge 121a.

The part, extending beyond the first edge 121a, of the connecting piece 40 is exposed. When the tab 12, the connecting piece 40, and the electrode terminal 30 are welded, the part, extending beyond the first edge 121a, of the connecting piece 40 can be used for positioning, thereby improving the welding accuracy and reducing the risk of cold solder joints.

In some embodiments, the laminated section 121 includes two second edges 121b, and the two second edges 121b are arranged opposite to each other and connected to the first edge 121a. In an arrangement direction of the two second edges 121b, both the second edges 121b extend beyond the connecting piece 40. In the arrangement direction of the two second edges 121b, the connecting piece 40 can have a smaller size than the laminated section 121, thereby saving space and increasing the energy density.

In some embodiments, the two second edges 121b are arranged opposite to each other in the second direction X. For example, the first direction Y, the second direction X, and the thickness direction Z are mutually perpendicular to each other. Optionally, the second direction Y is perpendicular to the length direction of the end cover.

In some embodiments, the electrode terminal 30 has an inner surface 31 facing the connecting piece 40, and the inner surface 31 is attached to the connecting piece 40 in the thickness direction Z. The laminated section 121 includes the two second edges 121b arranged opposite to each other; in the arrangement direction of the two second edges 121b, both ends of the connecting piece 40 extend beyond the inner surface 31, and both the second edges 121 extend beyond the connecting piece 40. The connecting piece 40 can cover the electrode terminal 30 as much as possible, thereby reducing the risk of cold solder joints and increasing the contact area and connection strength between the connecting piece 40 and the electrode terminal 30. In the arrangement direction of the two second edges 121b, the part, extending beyond the electrode terminal 30, of the connecting piece 40 will not connect to the electrode terminal 30. Therefore, the connecting piece 40 can have a smaller size than the laminated section 121, thereby saving space and increasing the energy density.

In some embodiments, in the second direction X, the size of the connecting piece 40 is less than the size of the laminated section 121 and greater than the size of the electrode terminal 30. In the second direction X, the size of the connecting piece 40 is greater than the size of the electrode terminal 30, so that the connecting piece 40 can cover the electrode terminal 30 as much as possible, thereby reducing the risk of cold solder joints. In the second direction X, the part, extending beyond the electrode terminal 30, of the connecting piece 40 will not connect to the electrode terminal 30. Therefore, the connecting piece 40 can have a smaller size than the laminated section 121, thereby saving space and increasing the energy density.

In some embodiments, the root portion 123 connects the bent section 122 and the main body portion 11.

In some embodiments, the positive tab and the negative tab extend from both ends of the main body portion 11, respectively.

In some embodiments, the second welded portion W2 is strip-shaped and the second welded portion W2 extends in the second direction X.

Optionally, a plurality of second welded portions W2 are provided, and the plurality of second welded portions W2 are arranged spaced apart from each other in the first direction Y. The outer periphery of each second welded portion W2 is directly connected to the first welded portion W1.

In some embodiments, the first welded portion W1 and the second welded portions W2 form a welded portion. The second welded portion W2 has a size of L1 in the second direction X, the welded portion has a size of L2 in the second direction X, and the connecting piece 40 has a size of L3 in the second direction X, where L3≥L2≥L1.

The second welded portion W2 has a size of W1 in the first direction Y, and the welded portion has a size of W2 in the first direction Y, where W2≥W1. The size of the connecting piece 40 in the first direction Y is greater than W2.

In some embodiments, the connecting piece 40 is rectangular.

In some embodiments, the battery cell 6 can be assembled according to the following steps: First, the tab 12 and the connecting piece 40 are ultrasonically welded to form an ultrasonic welding mark; then, the connecting piece 40 is attached to the electrode terminal 30; then, laser irradiation is applied to the ultrasonic welding mark from the tab 12 side, and the laser melts a part of the ultrasonic welding mark and a part of the electrode terminal 30 to form a molten pool. After the molten pool solidifies, the second welded portion W2 (i.e., laser welding mark) is formed. The remaining part (i.e., the part that was not melted by laser irradiation) of the ultrasonic welding mark forms the first welded portion W1.

During laser irradiation, the laser acts on the ultrasonic welding mark, which thus can reduce the heat impact on the unwelded portion of the tab 12.

For example, the size of the ultrasonic welding mark in the first direction Y is W2, and the size of the ultrasonic welding mark in the second direction X is L2.

In some embodiments, in the thickness direction Z of the connecting piece 40, the projected area of the ultrasonic welding mark is greater than or equal to 1.2 times the projected area of the second welded portion W2.

In some other embodiments, the battery cell 6 can be assembled according to the following steps: First, the tab 12 and the connecting piece 40 are ultrasonically welded to form an ultrasonic welding mark (i.e., the first welded portion W1); then, the connecting piece 40 is attached to the electrode terminal 30; then, laser irradiation is performed from the tab 12, the laser avoids the ultrasonic welding mark, the laser melts a part of the tab 12, a part of the connecting piece 40, and a part of the electrode terminal 30 to form a molten pool. After the molten pool solidifies, the second welded portion W2 (i.e., laser welding mark) is formed.

In still some other embodiments, the battery cell 6 can be assembled according to the following steps: First, the tab 12 and the connecting piece 40 are ultrasonically welded to form an ultrasonic welding mark; then, the connecting piece 40 is attached to the electrode terminal 30; then, laser irradiation is performed on the ultrasonic welding mark and a part, not subjected to ultrasonic welding, of the tab 12, and the laser melts a part of the ultrasonic welding mark, a part of the tab 12, a part of the connecting piece 40, and a part of the electrode terminal 30 to form a molten pool. After the molten pool solidifies, the second welded portion W2 (i.e., laser welding mark) is formed. The remaining part (i.e., the part that was not melted by laser irradiation) of the ultrasonic welding mark forms the first welded portion W1.

In some embodiments, a material of the tab 12, a material of the connecting piece 40, and a material of the electrode terminal 30 are the same.

According to some embodiments of the present application, the present application also provides a battery, including a plurality of battery cells 6 according to any one of the above embodiments.

According to some embodiments of the present application, the present application further provides an electric apparatus, including the battery cell 6 according to any one of the above embodiments. The battery cell 6 is configured to provide electric energy for the electric apparatus. The electric apparatus can be any one of devices or systems above using the battery cell 6.

With reference to FIG. 3 to FIG. 8, embodiments of the present application provide a battery cell 6, which includes a shell 20, an electrode terminal 30, an electrode assembly 10, and a connecting piece 40. The electrode terminal 30 is arranged on the shell 20. The electrode assembly 10 is accommodated in the shell 20, the electrode assembly 10 includes a main body portion 11 and a tab 12, and the tab 12 extends out from one end, facing the electrode terminal 30, of the main body portion 11. At least a part of the connecting piece 40 is located between the tab 12 and the electrode terminal 30.

The connecting piece 40 and the tab 12 are connected by ultrasonic welding to form a first welded portion W1. The connecting piece 40, the tab 12, and the electrode terminal 30 are connected by laser welding to form a second welded portion W2. The second welded portion W2 is surrounded by the first welded portion W1, and an entire outer periphery of the second welded portion W2 is directly connected to the first welded portion W1.

Although the present application has been described with reference to the preferred embodiments, without departing from the scope of the present application, various improvements may be made to the present application and parts therein may be replaced with equivalents. In particular, the technical features mentioned in the embodiments may be combined in any manner, as long as there is no structural conflict. The present application is not limited to the specific embodiments disclosed herein, but rather includes all technical solutions falling within the scope of the claims.

## Claims

1. A battery cell, comprising:
a shell;
an electrode terminal arranged on the shell;
an electrode assembly accommodated in the shell, wherein the electrode assembly comprises a main body portion and a tab, and the tab extends out from one end, facing the electrode terminal, of the main body portion; and
a connecting piece, wherein the connecting piece is welded to the tab to form a first welded portion, and the connecting piece, the tab, and the electrode terminal are welded to form a second welded portion.

2. The battery cell according to claim 1, wherein the first welded portion is directly connected to the second welded portion.

3. The battery cell according to claim 1 or 2, wherein at least a part of the first welded portion is arranged around the second welded portion.

4. The battery cell according to claim 3, wherein an entire outer peripheral edge of the second welded portion is directly connected to the first welded portion.

5. The battery cell according to any one of claims 1-4, wherein in a thickness direction of the connecting piece, at least a part of the connecting piece is located between the electrode terminal and the tab and welded to both the tab and the electrode terminal.

6. The battery cell according to claim 5, wherein the tab comprises a laminated section and a bent section, the laminated section is attached to the connecting piece in the thickness direction, and the bent section is bent from one end of the laminated section and connected to the main body portion; and
the laminated section is welded to the connecting piece to form the first welded portion, and the connecting piece, the laminated section, and the electrode terminal are welded to form the second welded portion.

7. The battery cell according to claim 6, wherein in the thickness direction, a part of the connecting piece does not overlap with the laminated section.

8. The battery cell according to claim 6 or 7, wherein the laminated section comprises a first edge and two second edges, the first edge is located at one end, away from the bent section, of the laminated section, and the two second edges are arranged opposite to each other and connected to the first edge;
a part of the connecting piece extends beyond the first edge; and in an arrangement direction of the two second edges, both the second edges extend beyond the connecting piece.

9. The battery cell according to claim 6 or 7, wherein the electrode terminal has an inner surface facing the connecting piece, and the inner surface is attached to the connecting piece in the thickness direction;
the laminated section comprises two second edges arranged opposite to each other; and in an arrangement direction of the two second edges, both ends of the connecting piece extend beyond the inner surface, and both the second edges extend beyond the connecting piece.

10. The battery cell according to any one of claims 1-9, wherein in an extension direction of the tab, at least a part of the first welded portion is located between a root portion of the tab and the second welded portion.

11. The battery cell according to any one of claims 1-10, wherein in the thickness direction of the connecting piece, a projected area of the first welded portion is greater than or equal to 0.2 times a projected area of the second welded portion.

12. The battery cell according to any one of claims 1-11, wherein the connecting piece and the tab are connected by ultrasonic welding to form the first welded portion, and the connecting piece, the tab, and the electrode terminal are connected by laser welding to form the second welded portion.

13. The battery cell according to any one of claims 1-12, wherein a thickness of the connecting piece is 0.1 mm to 1.5 mm.

14. A battery, comprising a plurality of battery cells according to any one of claims 1-13.

15. An electric apparatus, comprising the battery according to claim 14, wherein the battery is configured to provide electric energy.
